Europäisches Patentamt

European Patent Office

Office européen des brevets

(11) Numéro de publication : **0 236 180 B1**

## (12) FASCICULE DE BREVET EUROPEEN

(45) Date de publication du fascicule du brevet :
**25.09.91 Bulletin 91/39**

(51) Int. Cl.⁵ : **H04M 1/72, H04B 10/24**

(21) Numéro de dépôt : **87400189.4**

(22) Date de dépôt : **28.01.87**

(54) Système de communications téléphoniques à combinés portatifs.

(30) Priorité : **28.01.86 FR 8601277**

(43) Date de publication de la demande :
**09.09.87 Bulletin 87/37**

(45) Mention de la délivrance du brevet :
**25.09.91 Bulletin 91/39**

(84) Etats contractants désignés :
**AT BE CH DE ES FR GB GR IT LI LU NL SE**

(56) Documents cités :
**EP-A- 0 115 240**
**DE-A- 2 947 164**

(73) Titulaire : **Parienti, Raoul**
**5, rue de Belgique**
**F-06000 Nice (FR)**

(72) Inventeur : **Parienti, Raoul**
**5, rue de Belgique**
**F-06000 Nice (FR)**

(74) Mandataire : **Nony, Michel et al**
**Cabinet NONY & CIE, 29, rue Cambacérès**
**F-75008 Paris (FR)**

## Description

La présente invention concerne un système de communications téléphoniques comprenant au moins une borne fixe reliée par une ligne d'abonné à un central téléphonique, et une pluralité de combinés portatifs, la borne fixe et les combinés portatifs étant munis de moyens de transmission par rayonnement infrarouge pour échanger au moins des informations de taxation et des informations de données phoniques.

On connaît déjà un tel système de communications par la demande de brevet européen N°0115240. Le système décrit dans ce document permet à chaque utilisateur disposant d'un combiné portatif, d'accéder au réseau téléphonique par l'intermédiaire d'une borne fixe disposée dans une cabine téléphonique. Il présente toutefois l'inconvénient de prévoir une gestion centralisée des taxations avec émission de factures aux différents utilisateurs. Ces derniers doivent par conséquent disposer d'un abonnement sur le compte duquel les taxes téléphoniques sont débitées.

La présente invention vise à pallier cet inconvénient en rendant les combinés portatifs totalement autonomes par une gestion décentralisée de la taxation.

A cet effet l'invention a pour objet un système de communications téléphoniques comprenant au moins une borne fixe reliée par une ligne d'abonné à un central téléphonique, et une pluralité de combinés portatifs, la borne fixe et les combinés portatifs étant munis de moyens de transmission par rayonnement infrarouge pour échanger au moins des informations de taxation et des informations de données phoniques, la borne fixe étant en outre munie de moyens pour transmettre à un combiné déterminé des signaux de taxation qu'il reçoit du central téléphonique au fur et à mesure de la communication, caractérisé par le fait que chaque combiné portatif est muni de moyens de réception pour un support de mémoire morte programmable du type "carte à mémoire", et que ledit combiné portatif est agencé pour décompter de ladite mémoire morte programmable des unités de taxation correspondant aux signaux de taxation transmis par la borne fixe.

La carte à mémoire pouvant être pré-payée, l'utilisateur est par conséquent débité au fur et à mesure de sa communication lors de la réception des signaux de taxation, sans qu'il soit nécessaire d'effectuer aucun calcul que ce soit au niveau de la borne fixe ou au niveau du combiné portatif. De plus le central téléphonique auquel est reliée la borne fixe ne nécessite aucune adaptation particulière.

Le combiné portatif est de préférence agencé pour transmettre un signal d'acquittement à la borne fixe après avoir décompté ladite unité de taxation, la borne fixe étant de son côté agencée pour couper la communication en cas de non réception du signal d'acquittement après transmission d'un signal de taxation.

On évite ainsi toute possibilité de fraude, qui pourrait par exemple consister à occulter les informations de taxation lors de leur réception par le combiné portatif. En effet, dans ce cas, le combiné ne transmettrait pas le signal d'acquittement, ce qui conduirait à une coupure de la communication.

De manière à limiter encore les possibilités de fraude, les informations de taxation transmises de la borne fixe au combiné portatif peuvent être constituées par un code aléatoire dont la série peut en outre être dépendante d'un numéro d'identification de la borne fixe et/ou du combiné portatif. Dans ce cas, le combiné portatif transforme ce code par un algorithme de cryptage et le renvoit à la borne fixe après avoir décompté une unité de taxation de la mémoire morte programmable. La borne fixe décrypte le signal d'acquittement par un algorithme inverse et en déduit la validité de la taxation. Si cette validité n'est pas reconnue, la borne fixe réitère son information de taxation un certain nombre de fois au delà duquel la communication est coupée.

Dans un mode de réalisation particulier de l'invention, la borne fixe est reliée au central téléphonique par une pluralité de lignes d'abonnés et elle est agencée pour échanger lesdites informations de taxation et de données phoniques avec une pluralité de combinés portatifs par multiplexage dans le temps.

Dans ce cas notamment, la borne fixe peut être disposée dans un endroit dégagé à une certaine hauteur, ce qui la met en outre à l'abri du vandalisme.

La borne fixe et les combinés portatifs peuvent être agencés pour échanger lesdites informations sous forme de paquets d'impulsions émises par des diodes infrarouge commandées par des moyens de commande disposés respectivement dans la borne fixe et dans chaque combiné portatif.

Plus particulièrement, chaque paquet d'impulsions peut comprendre des impulsions correspondant à une pluralité d'échantillonnages précédant son émission, la borne fixe et les combinés portatifs comprenant des moyens de logique combinatoire pour déterminer, à partir des impulsions d'une pluralité de paquets d'impulsions successifs, l'information la plus probablement émise.

Un tel agencement est particulièrement intéressant dans le cas où la borne fixe est disposée comme mentionné précédemment dans un environnement non protégé. On assure en effet par ce moyen, une redondance de l'information permettant de limiter les erreurs de transmission. Il faut en effet noter qu'une liaison par infrarouge en milieu non protégé peut être perturbée par des variations de luminosité ambiante en l'absence de mesures spécifiques prises pour éviter ces perturbations.

Dans le cas où la borne fixe permet l'acheminement d'une pluralité de communications, comme la possibilité en a été mentionnée ci-dessus, il est nécessaire d'assurer la confidentialité de chacune de ces communications.

A cet effet chaque paquet d'impulsions peut comprendre des impulsions identifiant le combiné portatif auquel est destiné, ou d'où provient, ledit paquet d'impulsions.

Avantageusement, un code est affecté à chaque combiné portatif, la borne fixe est agencée pour recevoir sur sa ligne un appel comportant un tel code et pour émettre un paquet d'impulsions comportant le code reçu, et le combiné est agencé pour émettre un signal en réponse à la réception d'un paquet comportant son propre code et pour être mis en communication avec ladite ligne.

On décrira maintenant à titre d'exemple non limitatif un mode de réalisation particulier de l'invention en référence aux dessins annexées dans lesquels :

– la figure 1 est un schéma d'ensemble du système selon l'invention,

– la figure 2 est un organigramme illustrant les différentes étapes d'une liaison à l'aide du système selon l'invention,

– la figure 3 est un schéma synoptique d'une borne fixe selon l'invention,

– la figure 4 est un schéma du circuit logique d'une voie de cette borne fixe, et

– la figure 5 est un schéma synoptique d'un combiné portatif selon l'invention.

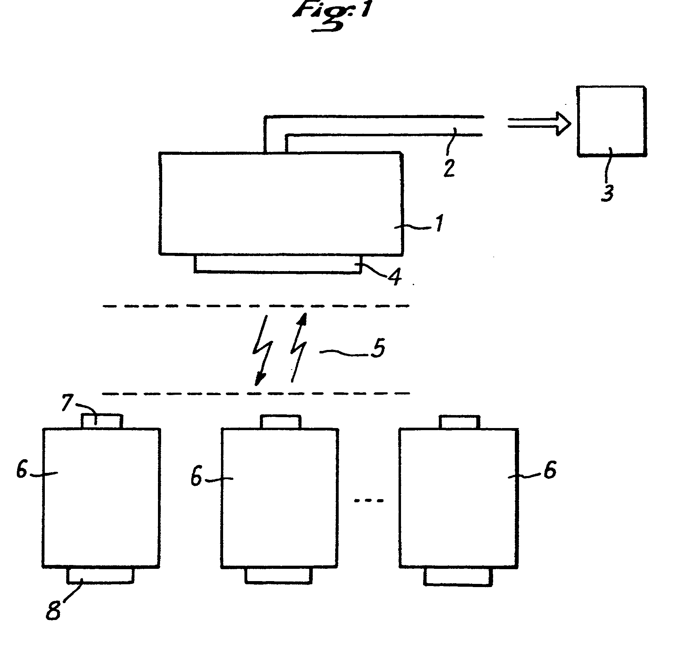

On voit sur la figure 1 une borne fixe (1) reliée par un ensemble de lignes téléphoniques d'abonnés (2) à un central téléphonique (3). La borne fixe (1) comporte autant de voies qu'il existe de lignes (2), chaque voie se comportant vis à vis du central (3) comme un poste d'abonné. Un ensemble (4) de photodiodes et de photorécepteurs infrarouges permet d'établir une liaison (5) avec autant de combinés portatifs (6) qu'il existe de lignes téléphoniques (2) reliant le central (3) à la borne fixe (1).

A cet effet chaque combiné portatif (6) comprend également un ensemble de photodiodes et de photorécepteurs infrarouges (7) permettant d'émettre des informations à destination de la borne (1) et de recevoir d'autres informations de cette dernière.

Bien entendu le combiné (6) comprend également au moins un clavier à touches de numérotation et de fonctions, un microphone, un haut-parleur, ainsi de préférence qu'un écran d'affichage à cristaux liquides.

Enfin selon l'invention chaque combiné portatif (6) comprend un logement permettant la réception d'une carte à mémoire (8) supportant une mémoire morte programmable. Des contacts électriques appropriés dans ce logement permettent d'assurer l'interface entre les circuits décrits ci-après du combiné (6) et la mémoire portée par la carte (8).

Les ensembles infrarouges (4 et 7) sont de préférence agencés de manière à permettre deux modes de fonctionnement, à savoir un mode "grand angle" dans lequel l'émission s'effectue sur environ un quart de sphère, et un mode "angle étroit" dans lequel l'émission s'effectue suivant un angle par exemple de l'ordre de 40°. Il est ainsi possible d'augmenter la distance de réception moyennant une réduction de l'angle dans lequel cette réception est possible. Du côté de la borne fixe le passage d'un mode à l'autre peut s'effectuer automatiquement en fonction de la qualité de la réception des impulsions reçues du combiné portatif.

La liaison (5) consiste en un échange entre la borne fixe (1) et les combinés portatifs (6), de paquets d'impulsions infrarouges ayant une structure temporelle fixe. Cet échange est réalisé par multiplexage dans le temps, c'est-à-dire que la borne fixe (1) adresse un premier paquet d'impulsions à l'un des combinés portatifs, puis reçoit de celui-ci un paquet d'impulsions en réponse. La borne fixe adresse alors un nouveau paquet d'impulsions à un autre combiné et ainsi de suite jusqu'à ce que le cycle recommence. La durée du cycle est égale à la période d'échantillonnage de la voix réalisée dans la borne fixe pour la réception, et dans chaque combiné pour l'émission.

Chaque paquet d'impulsions comporte notamment :

– une impulsion initiale de synchronisation dont la fonction est de caler le récepteur éventuel (borne fixe ou combiné portatif) pour qu'il puisse recevoir et répartir les différentes impulsions suivantes dans un système de pile;

– une série d'impulsions de gestion indiquant le numéro de la voie utilisée de façon à assurer la confidentialité de la liaison. En effet quand un combiné portatif capte un paquet d'impulsions, il teste ces impulsions de désignation de voie de façon à savoir s'il doit prendre en compte cette émission et y répondre. Par contre tous les combinés portatifs émettent le même numéro de voie. Ainsi un combiné portatif ne peut pas répondre à un autre combiné portatif qui se trouverait à proximité et dont il capterait l'émission par erreur. De toute manière il n'y a aucun risque de voir la borne fixe commettre une erreur sur l'origine d'un paquet d'impulsions, du fait que chaque combiné portatif ne peut émettre qu'en réponse à la réception de l'impulsion de fin de paquet décrite ci-après, émise par la borne ;

– d'autres impulsions de gestion permettant de faire passer de façon inaudible pour l'utilisateur un certain nombre d'informations telles que les informations de numérotation, et plus particulièrement les informations de taxation. Dans le sens borne/combiné, ces informations de taxation sont constituées d'un code visant à débiter la carte à mémoire au fur et à mesure de la communication. Dans le sens combiné/borne, ces informations de taxation sont constituées par le signal d'acquittement établissant que la carte à mémoire a bien été débitée en réponse à la réception du code émis par la borne;

– des impulsions de données phoniques permettant au récepteur de reconstituer le son comme cela sera décrit ci après;

– une impulsion de fin de paquet dont la fonction est de faire démarrer l'horloge libre de séquencement d'émission du correspondant si son paquet d'impulsions doit suivre.

Afin de permettre l'installation de la borne fixe dans un milieu non protégé, on prévoit un procédé de redondance séquentielle permettant d'assurer la fiabilité de la transmission.

A cet effet les impulsions de données phoniques de chaque paquet d'impulsions comprennent l'information codée correspondant non seulement au dernier échantillonnage, mais également aux deux échantillonnages précédents. Chaque donnée est donc transmise trois fois, chacune des valeurs transmises étant conservée en mémoire du côté du récepteur.

Une logique combinatoire permet à partir de ces trois valeurs mémorisées de déterminer la valeur la plus probable qui est alors adressée au système de conversion.

Chaque donnée phonique est donc décalée dans le temps d'une valeur égale à trois fois la période d'échantillonnage du convertisseur mais cette valeur reste d'un ordre de grandeur imperceptible pour l'oreille.

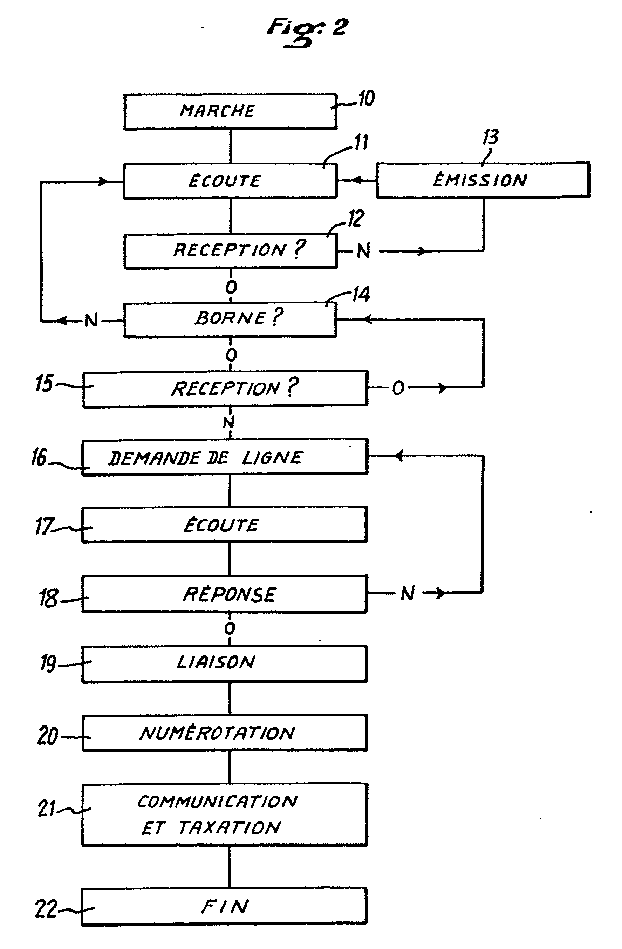

On décrira maintenant d'une manière générale, en référence à la figure 2, comment se déroule une communication téléphonique entre un combiné portatif (6) et un poste d'abonné connecté au réseau auquel est relié le central téléphonique (3).

Le possesseur d'un combiné (6) se place tout d'abord à une distance d'une borne fixe (1) permettant d'assurer une liaison infrarouge dans de bonnes conditions. Il met ensuite en (10) son combiné en configuration de marche active, par exemple en l'ouvrant complètement si ce combiné est repliable.

Le combiné se met alors en écoute en (11) pour détecter en (12) une éventuelle émission provenant de la borne fixe (1). Si aucune émission n'est détectée, le combiné émet au bout d'un certain temps en (13) quelques impulsions infrarouges destinées à exciter la borne fixe puis se remet en position d'écoute pour capter l'émission attendue.

Dès la réception d'un premier paquet d'impulsions en (12), le combiné teste en (14) les impulsions de gestion de ce paquet afin de s'assurer qu'il provient bien de la borne fixe et non pas d'un autre combiné qui serait en service à proximité.

Après la réception du premier paquet d'impulsions de la borne fixe, le combiné se met en écoute pendant un temps correspondant à l'écart temporel entre deux voies successives de la borne fixe, pour déterminer en (15) si la voie suivante est occupée. Si un autre paquet d'impulsions survient, le combiné réitère la même action jusqu'à percevoir la présence d'un "trou" dans la succession des paquets d'impulsions.

Si aucun trou n'est détecté, toutes les voies de la borne fixe sont occupées.

Si au contraire un trou est détecté le combiné émet en (16) un signal de demande de voie, synchronisé sur les signaux du paquet précédemment reçu.

Le combiné se met alors en écoute en (17) pendant une durée égale à un cycle de la borne fixe en attente de la réponse en (18) par laquelle la borne fixe indique qu'elle dispose d'une ligne libre. Cette réponse comporte une identification de la voie attribuée au combiné.

La liaison entre le combiné et la borne est alors établie en (19) et la borne transmet au combiné la tonalité d'invitation à numéroter.

Le possesseur du combiné compose alors en (20) le numéro de son correspondant, que la borne fixe (1) transmet au central (3) par l'intermédiaire de la ligne téléphonique (2) correspondant à la voie attribuée au combiné. La communication s'établit alors en (21) et l'échange de paquet d'impulsions se poursuit comme indiqué ci-dessus, jusqu'à la fin de transmission en (22).

Au cours de la communication, le combiné détecte, parmi les impulsions de gestion, celles qui correspondent à une demande de débit de la carte à mémoire. Lors de leur réception, les circuits du combiné débitent une unité de taxation sur la carte et adressent à la borne fixe, dans le paquet d'impulsions suivant, un signal d'acquittement. En l'absence de ce signal, la borne fixe coupe la communication.

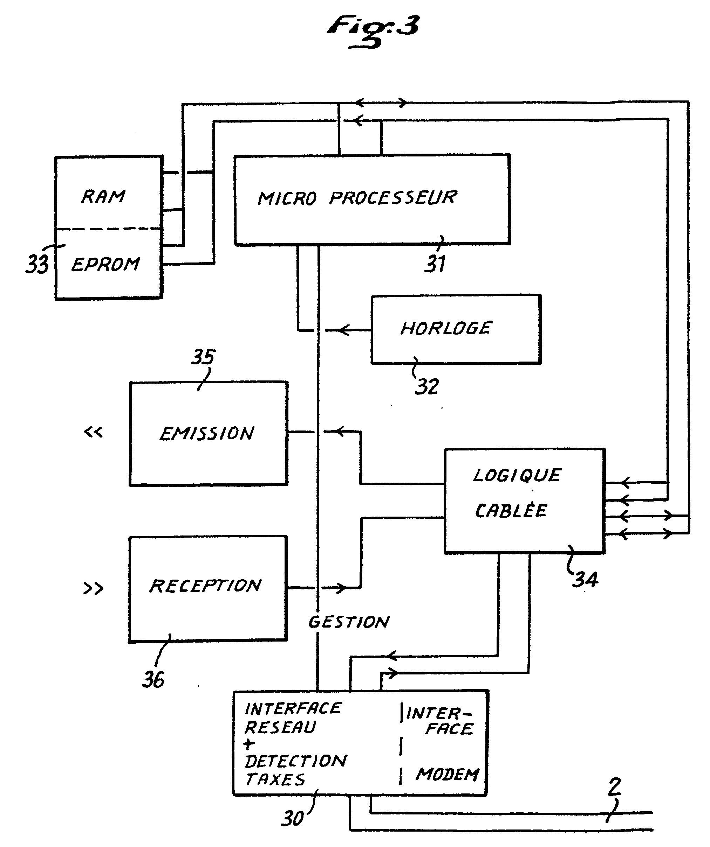

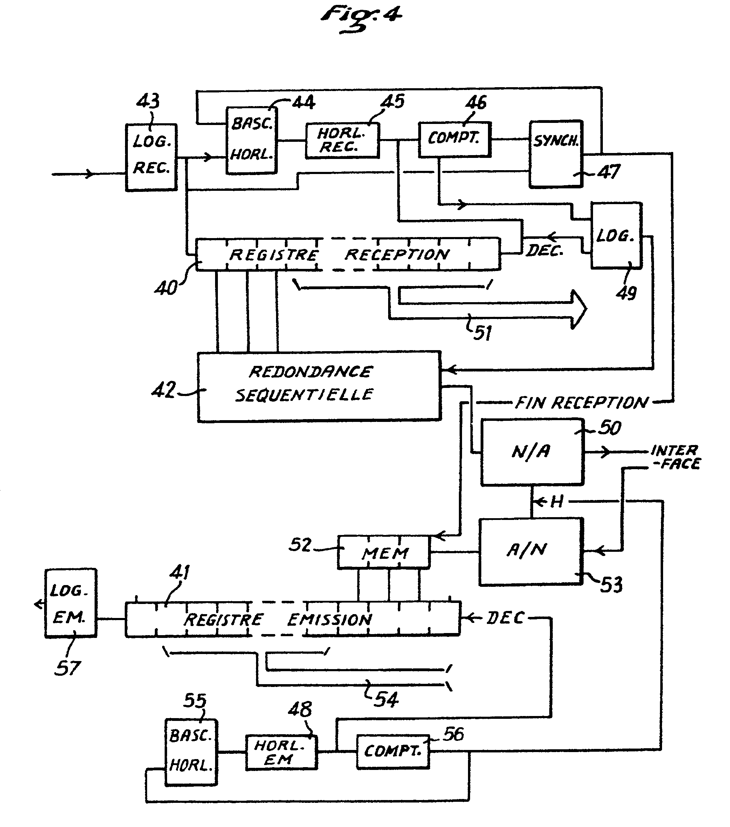

On décrira maintenant la borne fixe (1) en référence aux figures 3 et 4.

Comme montré sur la figure 3 cette borne comporte une interface (30) avec les lignes (2).

C'est au niveau de cette interface (30) que s'effectue la détection des signaux de taxation provenant du central (3) par l'intermédiaire des lignes (2).

L'interface (30) est gérée par un microprocesseur (31) piloté par une horloge (32). Le microprocesseur (31) assure notamment la gestion des informations de taxation provenant de l'interface (30) de manière à les coder et à assurer leur émission vers les différents combinés utilisant la borne fixe. Le microprocesseur (31) est également agencé pour vérifier la réception des signaux d'acquittement provenant des combinés et pour couper la communication en l'absence de ces signaux.

La borne fixe comporte également des mémoires (33) contenant les différentes données nécessaires au fonctionnement du microprocesseur.

Un circuit logique câblé (34) qui sera décrit plus en détail ci-après, est commandé par le microprocesseur (1), et assure le transfert des informations vers un bloc d'émission (35), et provenant d'un bloc de réception (36).

Le bloc d'émission (35) assure la commande des diodes photo-émettrices infrarouges mentionnées ci-dessus, alors que le bloc de réception (36) sert d'interface entre les photo-récepteurs du bloc optique et la logique câblée (34).

Comme représenté à la figure 4, une voie de cette logique câblée comprend essentiellement un registre à décalage de réception (40) et un registre à décalage d'émission (41). Le registre (40) est relié au bloc de redondance séquentielle (42) permettant de distinguer, lors de la réception, les impulsions de données phoniques correspondant aux trois échantillonnages précédent.

Les impulsions provenant du bloc de réception (36) sont transmises au registre de réception (40) par l'intermédiaire d'un circuit logique de validation de voie de réception (43).

Lors de la réception d'un paquet d'impulsions par le bloc de réception (36) et de la validation de la voie par la logique (43), l'impulsion de synchronisation de ce paquet provoque le basculement d'une bascule (44) qui fait démarrer l'horloge de cadencement de réception (45) de façon à remplir le registre à décalage (40) des différentes valeurs des impulsions suivantes. Les impulsions d'horloge sont comptées dans un compteur (46) muni d'un circuit décodeur. Une logique de synchronisation (47) reliée au compteur décodeur (46) permet ainsi de se caler sur l'impulsion de fin de paquet pour arrêter l'horloge de réception (45) par la bascule (44), et préparer le démarrage d'une horloge d'émission (48).

Les informations de données qui se trouvent dans le registre à décalage (40) sont transmises au bloc de traitement de la redondance séquentielle (42) commandé par une logique (49). Ce bloc (42) permet de lever éventuellement un doute sur la valeur de la donnée à transférer au convertisseur numérique/analogique (50), et de ce convertisseur, à l'interface (30). Par contre les informations de gestion contenues dans le registre à décalage (40) sont transmises au microprocesseur (31) par l'intermédiaire du bus (51).

Dès l'occurence du signal de fin de transmission délivrée par la logique de synchronisation (47), on effectue un chargement du registre à décalage d'émission (41) à partir d'une part, pour les informations de données phoniques, d'une mémoire-tampon (52) reliée à l'interface (30) par l'intermédiaire d'un convertisseur analogique/numérique (53), et d'autre part, pour les informations de gestion, d'un bus (54) relié au microprocesseur. Les impulsions de synchronisation de début et de fin de paquet sont introduites dans le registre (41) par forçage. L'horloge d'émission (48) est alors lancée par une bascule (55) et cadence la transmission des données qui sortent du registre à décalage (41) vers le bloc d'émission (35).

Un compteur (56) muni d'un décodeur permet d'arrêter l'horloge d'émission lors de la détection de l'impulsion de fin de paquet. On notera enfin que de même qu'à la réception, le registre à décalage d'émission (41) est relié au bloc d'émission (35) par l'intermédiaire d'une logique de validation d'émission (57).

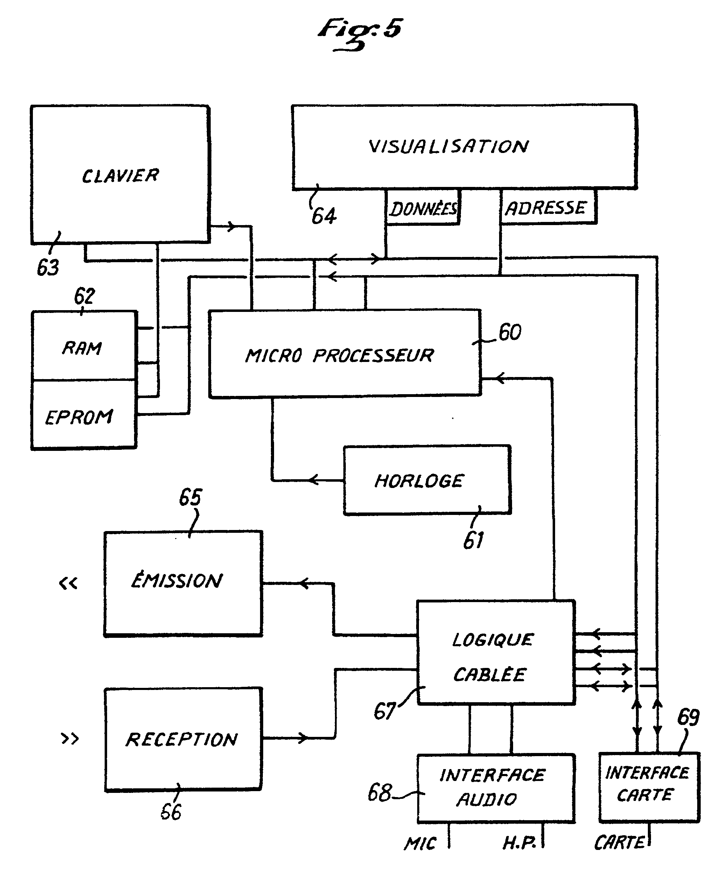

On décrira maintenant en référence à la figure 5 l'agencement général d'un combiné (6).

Sur cette figure on a représenté en (60) le microprocesseur du combiné piloté par une horloge (61) et relié à une mémoire (62) contenant les données nécessaires à son fonctionnement.

Le microprocesseur est également relié au clavier (63) du combiné et à son écran de visualisation (64).

De même que pour la borne fixe, un bloc d'émission (65) et un bloc de réception (66) sont reliés à une logique câblée (67) recevant des informations d'une part du microprocesseur (60), et d'autre part d'une interface (68) avec le micro et le haut-parleur du combiné.

Enfin le microprocesseur (60) est relié à un circuit (69) d'interface avec la carte à mémoire de manière à débiter cette dernière d' unités de taxation successives lors de la réception des informations de taxation par l'intermédiaire du bloc (66) et de la logique câblée (67).

Le circuit logique (67) est identique au circuit logique d'une voie de la borne fixe tel que décrit en référence à la figure 4, si ce n'est l'absence des blocs de validation (43) et (57).

On prévoit en outre la possibilité pour le possesseur d'un combiné portatif d'être appelé par l'intermédiaire d'une borne fixe prédéterminée.

A cet effet il se place à proximité de cette borne et place par une commande appropriée son combiné dans une position de veille dans laquelle les circuits de réception sont alimentés. Le correspondant compose le numéro de ligne de la borne fixe. Celle-ci décroche la ligne et émet sur celle-ci une invitation à composer un code complémentaire caractéristique du combiné de son correspondant. Ce code peut par exemple être à deux chiffres, la probabilité d'avoir en présence deux combinés portatifs affectés du même numéro étant alors suffisamment faible. La borne fixe émet ensuite un paquet de signaux d'appel comprenant notamment ce code, ce qui a pour effet de faire émettre un signal sonore par le combiné concerné. Le possesseur de ce combiné met alors son appareil en position de marche de manière à prendre la communication.

Diverses variantes et modifications peuvent bien entendu être apportées à la description qui précède sans sortir pour autant du cadre ni de l'esprit de l'invention.

## Revendications

1. Système de communications téléphoniques, comprenant au moins une borne fixe (1) reliée par une ligne d'abonné (2) à un central téléphonique (3), et une pluralité de combinés portatifs (6), la borne fixe et les combinés portatifs étant munis de moyens de transmission (4,7) par rayonnement infrarouge pour échanger au moins des informations de taxation et des informations de données phoniques, la borne fixe étant en outre munie de moyens (31,35,41) pour transmettre à un combiné déterminé des signaux de taxation qu'il reçoit du central téléphonique au fur et à mesure de la communication, caractérisé par le fait que chaque combiné portatif est muni de moyens de réception pour un support (8) de mémoire morte programmable du type "carte à mémoire", et que ledit combiné portatif est agencé pour décompter de ladite mémoire morte programmable des unités de taxation correspondant aux signaux de taxation transmis par la borne fixe.

2. Système de communication selon la revendication 1, caractérisé par le fait que le combiné portatif est agencé pour transmettre un signal d'acquittement à la borne fixe après avoir décompté ladite unité de taxation, et que la borne fixe est agencée pour couper la communication en cas de non réception du signal d'acquittement après transmission d'un signal de taxation.

3. Système de communication selon l'une quelconque des revendications 1 et 2, caractérisé par le fait que la borne fixe est reliée au central téléphonique par une pluralité de lignes d'abonnés, et qu'elle est agencée pour échanger lesdites informations de taxation et de données phoniques avec une pluralité de combinés portatifs par multiplexage dans le temps.

4. Système de communication selon l'une quelconque des revendications 1 à 3, caractérisé par le fait que la borne fixe et les combinés portatifs sont agencés pour échanger lesdites informations sous forme de paquets d'impulsions émises par des diodes infrarouges, commandées par des moyens de commande disposés respectivement dans la borne fixe et dans chaque combiné portatif.

5. Système de communication selon la revendication 4, caractérisé par le fait que chaque paquet d'impulsions comprend des impulsions correspondant à une pluralité d'échantillonnages précédant son émission, et que la borne fixe et les combinés portatifs comprennent des moyens de logique combinatoire (42) pour déterminer à partir des impulsions d'une pluralité de paquets d'impulsions successifs l'information la plus probablement émise.

6. Système de communication selon la revendication 3 et l'une quelconque des revendications 4 et 5, caractérisé par le fait que chaque paquet d'impulsions comprend des impulsions identifiant le combiné portatif auquel est destiné, ou d'où provient, ledit paquet d'impulsions.

7. Système de communication selon l'une quelconque des revendications 1 à 6, caractérisé par le fait qu'un code est affecté à chaque combiné portatif, que la borne fixe est agencée pour recevoir sur sa ligne un appel comportant un tel code et pour émettre un paquet d'impulsions comportant le code reçu, et que le combiné est agencé pour émettre un signal en réponse à la réception d'un paquet comportant son propre code et pour être mis en communication avec ladite ligne.

## Patentansprüche

1. Telefonverbindungssystem mit mindestens einem über eine Teilnehmerleitung (2) mit einer Telefonzentrale (3) verbundenen festen Anschluß (1) und mehreren tragbaren Telefonapparaten (6), wobei der feste Anschluß und die tragbaren Telefonapparate mit Infrarotübertragungseinrichtungen (4, 7) zum Austausch mindestens von Gebühreninformationen und akustischen Daten versehen sind und der feste Anschluß außerdem eine Einrichtung (31, 35, 41) zum Übertragen der je nach der Verbindung von der Telefonzentrale empfangenen Gebührensignale an einen bestimmten Telefonapparat aufweist, dadurch gekennzeichnet, daß jeder tragbare Telefonapparat mit einer Einrichtung zur Aufnahme eines programmierbaren Festspeicherträgers (8) vom Speicherkartentyp versehen ist, und daß der tragbare Telefonapparat so eingerichtet ist, daß er an dem programmierbaren Speicher diejenigen Gebühreneinheiten verrechnet, die den über den festen Anschluß übertragenen Gebührensignalen entsprechen.

2. Verbindungssystem nach Anspruch 1, dadurch gekennzeichnet, daß der tragbare Telefonapparat so eingerichtet ist, daß er nach Verrechnung der Gebühreneinheit ein Bestätigungssignal an den festen Anschluß überträgt, und daß der feste Anschluß so eingerichtet ist, daß er die Verbindung unterbricht, falls er nach Übertragung eines Gebührensignals kein Bestätigungssignal empfängt.

3. Verbindungssystem nach Anspruch 1 oder 2, dadurch gekennzeichnet, daß der feste Anschluß mit der Telefonzentrale über mehrere Teilnehmerleitungen verbunden und so eingerichtet ist, daß er die Gebühreninformationen und die akustischen Daten mit mehreren tragbaren Telefonapparaten im Zeitmultiplex austauscht.

4. Verbindungssystem nach einem der Ansprüche 1 bis 3, dadurch gekennzeichnet, daß der feste Anschluß und die tragbaren Telefonapparate zum Austausch der Informationen in Form von über Infrarotdioden ausgesandte Impulspakete eingerichtet sind, wobei die Dioden von in dem festen Anschluß und jedem tragbaren Telefonapparat angeordnete Steuereinrichtungen steuerbar sind.

5. Verbindungssystem nach Anspruch 4, dadurch gekennzeichnet, daß jedes Impulspaket Impulse umfaßt, die mehreren Signalabtastungen vor der Aussendung entsprechen, und daß der feste Anschluß und die tragbaren Telefonapparate logische Verknüpfungseinrichtungen (42) aufweisen, um aus den Impulsen mehrerer aufeinanderfolgender Impulspakete die am wahrscheinlichsten ausgesandte Information zu bestimmen.

6. Verbindungssystem nach Anspruch 3 und einem der Ansprüche 4 und 5, dadurch gekennzeichnet, daß jedes Impulspaket Impulse zur Identifizierung des tragbaren Telefonapparates umfaßt, an den das besagte Impulspaket gerichtet ist bzw. von dem es herrührt.

7. Verbindungssystem nach einem der Ansprüche 1 bis 6, dadurch gekennzeichnet, daß jedem tragbaren Telefonapparat ein Code zugeordnet ist, daß der feste Anschluß so eingerichtet ist, daß er auf seiner Leitung einen diesen Code tragenden Anruf empfängt und ein den empfangenden Code tragendes Impulspaket aussendet, und daß der Telefonapparat so eingerichtet ist, daß er bei Empfang eines seinen eigenen Code tragenden Paketes ein Signal aussendet und mit der besagten Leitung in Verbindung tritt.

## Claims

1. Telephone communications system, comprising at least one fixed terminal (1) connected by a subscriber line (2) to a telephone exchange (3), and a plurality of portable handsets (6), the fixed terminal and the portable handsets being provided with means of transmission (4, 7) by infrared radiation for exchanging at least metering information and sound data information, the fixed terminal being furthermore provided with means (31, 35, 41) for transmitting to a specified handset metering signals which it receives from the telephone exchange as the communication proceeds, characterised in that each portable handset is provided with means of reception as regards a programmable read-only memory medium (8) of the "memory card" type, and in that the said portable handset is configured for discounting from the said programmable read-only memory metering units corresponding to the metering signals transmitted by the fixed terminal.

2. Communication system according to Claim 1, characterised in that the portable handset is configured for transmitting a clearance signal to the fixed terminal after having discounted the said metering unit, and in that the fixed terminal is configured for cutting the communication in the event of non-reception of the clearance signal after transmission of a metering signal.

3. Communication system according to either of Claims 1 and 2, characterised in that the fixed terminal is connected to the telephone exchange by a plurality of subscriber lines, and that it is configured for exchanging the said metering and sound data information with a plurality of portable handsets by time-division multiplexing.

4. Communication system according to any one of Claims 1 to 3, characterised in that the fixed terminal and the portable handsets are configured for exchanging the said information in the form of packets of pulses emitted by infrared diodes, controlled by control means disposed respectively in the fixed terminal and in each portable handset.

5. Communication system according to Claim 4, characterised in that each packet of pulses comprises pulses corresponding to a plurality of samplings preceding its emission, and in that the fixed terminal and the portable handsets comprise combinational logic means (42) for determining on the basis of the pulses from a plurality of successive packets of pulses the item of information most probably emitted.

6. Communication system according to Claim 3 and either of claims 4 and 5, characterised in that each packet of pulses comprises pulses identifying the portable handset for which the said packet of pulses is intended, or from which it arises.

7. Communication system according to any one of Claim 1 to 6, characterised in that a code is assigned to each portable handset, in that the fixed terminal is configured for receiving on its line a call comprising such a code and for emitting a packet of pulses comprising the code received, and in that the handset is configured for emitting a signal in response to the reception of a packet comprising its own code and for being placed in communication with the said line.

*Fig:1*

## Fig. 2

| | |
|---|---|
| MARCHE | 10 |

ÉCOUTE — 11

ÉMISSION — 13

RECEPTION ? — 12 → N

BORNE ? — 14

N ←

RECEPTION ? — 15 → O

N

DEMANDE DE LIGNE — 16

ÉCOUTE — 17

RÉPONSE — 18 → N

O

LIAISON — 19

NUMÉROTATION — 20

COMMUNICATION ET TAXATION — 21

FIN — 22

# Fig. 3

RAM

33 — EPROM

MICRO PROCESSEUR

31

HORLOGE

32

35

EMISSION

<<

LOGIQUE CABLÉE

34

36

RECEPTION

>>

GESTION

INTERFACE RESEAU + DETECTION TAXES

INTER- FACE

MODEM

2

30

# Fig.4

## Fig: 5